# EUROPEAN PATENT APPLICATION

(11) **EP 4 582 774 A1**
(43) Date of publication of application: **09.07.2025**
(21) Application number: 24199545.5
(22) Date of filing: 10.09.2024
(51) Int. Cl.: G01C 21/36, B60W 50/14

(54) **ELECTRONIC DEVICE AND METHOD FOR GUIDING PATH BASED ON ADAS MAP**

(30) Priority: 02.01.2024 KR 20240000579
(71) Applicant: Invavi Systems Corporation, Seongnam-si, Gyeonggi-do 13493 (KR)
(72) Inventor: KWON, Yeon Jeong, 13483 Seongnam-si, Gyeonggi-do (KR)
(74) Representative: BCKIP Part mbB

(57) **Abstract**

An electronic device according to an embodiment of the present disclosure includes: a display; a memory configured to store first map data and advanced driver assistance system (ADAS) map content mapped to the first map data in units of links; and a processor functionally connected to the display and the memory, and the processor checks whether content related to a current location among the ADAS map content falls within a predetermined range while guiding a path searched from the first map data, and when the content related to the current location falls within the predetermined range, the processor implements a UI screen, which highlights the content related to the current location, and outputs the implemented screen through the display.

## Description

### TECHNICAL FIELD

The present disclosure is a result of the study which has been carried out as an autonomous driving development innovation project (20026184) with the support of the Ministry of Trade, Industry and Energy (South Korea) and the Korea Planning and Evaluation Institute of Industrial Technology.

The present disclosure relates to advanced driver assistance technology.

### BACKGROUND

An advanced driver assistance system (ADAS) is a system configured to predict accidents by sensing the surrounding environment through sensor devices mounted on the front, side, and rear of a vehicle. The ADAS monitors the surroundings around the vehicle and driving behaviors inside the vehicle to sense potential risks in advance.

As ADAS technology advances, the ADAS has been evolving into an autonomous driving system that takes over driving control from the driver by using sensors, high-precision maps, and communication functions installed in the vehicle. The ADAS accounts for a big part of the autonomous vehicle market. Also, the need for ADAS maps has recently emerged to commercialize partial autonomous driving of Level 2.5+.

### SUMMARY

Although ADAS maps have been constructed to include various kinds of new content, such as curvature, slope, and speed limit, their utilization is still low.

Various embodiments of the present disclosure can provide an electronic device and method for guiding a path based on ADAS map content.

An aspect of the present disclosure provides an electronic device, including: a display; a memory configured to store first map data and advanced driver assistance system (ADAS) map content mapped to the first map data in units of links; and a processor functionally connected to the display and the memory, and the processor checks whether content related to a current location among the ADAS map content falls within a predetermined range while guiding a path searched from the first map data, and when the content related to the current location falls within the predetermined range, the processor implements a UI screen, which highlights the content related to the current location, and outputs the implemented UI screen through the display.

Another aspect of the present disclosure provides a method for guiding a path by an electronic device configured to store first map data and ADAS map content, including: an operation of checking whether content related to a current location among the ADAS map content falls within a predetermined range while guiding a path searched from the first map data; an operation of implementing a UI screen, which highlights the content related to the current location, when the content related to the current location falls within the predetermined range; and an operation of outputting the implemented UI screen through a display.

According to various embodiments of the present disclosure, it is possible to provide differentiated path guidance services by using ADAS map content. Besides, various effects directly or indirectly understood through the present disclosure may be provided.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG. 1** is a diagram illustrating a method of creating an ADAS map according to an embodiment of the present disclosure.
**FIG. 2** is a diagram illustrating a road slope according to an embodiment of the present disclosure.
**FIG. 3** is a diagram illustrating a road curvature according to an embodiment of the present disclosure.
**FIG. 4** is a configuration diagram illustrating an electronic device according to an embodiment of the present disclosure.
**FIG. 5** is a flowchart schematically illustrating a path guidance method according to an embodiment of the present disclosure.
**FIG. 6** is a detailed flowchart illustrating the path guidance method according to an embodiment of the present disclosure.
**FIG. 7** shows an example of a UI screen displaying road slopes according to an embodiment of the present disclosure.
**FIG. 8** shows an example of a UI screen displaying road curvatures according to an embodiment of the present disclosure.
**FIG. 9** shows an example of a UI screen displaying ADAS map content according to an embodiment of the present disclosure.

With regard to the description of the drawings, similar reference numerals may be used to refer to similar or related elements.

### DETAILED DESCRIPTION

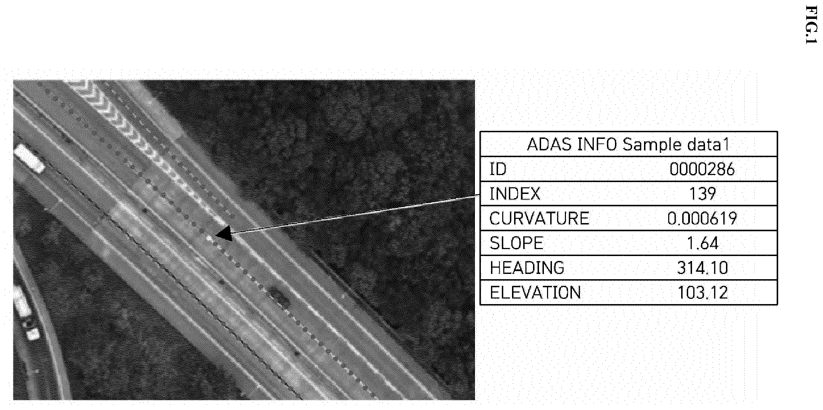

**FIG. 1** is a diagram illustrating a method of creating an ADAS map according to an embodiment of the present disclosure.

Referring to **FIG. 1****,** content of ADAS maps (hereinafter, referred to as "ADAS map content") may be created based on information acquired by a high-precision mobile mapping system (MMS) device. Vertex points may be specified at a predetermined distance (e.g., 2 m) based on a 3D road centerline acquired by the MMS device. Sequential index numbers for respective driving directions may be assigned to the specified vertex points in units of links. Thus, each vertex point may include a unique identification number (ID), an index number for each driving direction (INDEX), location coordinates (GPS coordinates), and attribute values. The attribute values may include at least one kind of road information, such as road curvature (CURVATURE), road slope (SLOPE), heading (HEADING), elevation (ELEVATION), and speed limit.

As such, ADAS map content is created at regular vertex point intervals (2m) based on the 3D road centerline, which makes it highly flexible for customization according to a service platform.

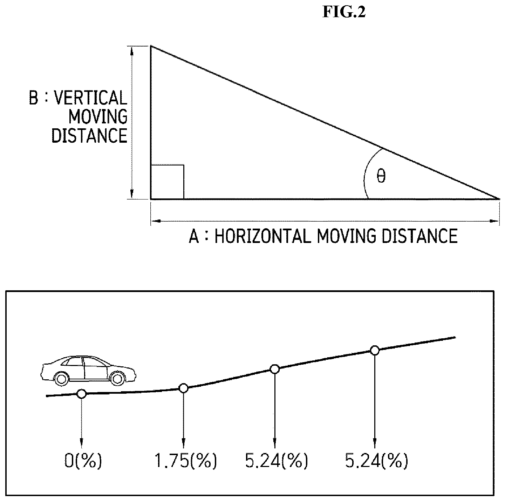

**FIG. 2** is a diagram illustrating a road slope according to an embodiment of the present disclosure.

Referring to **FIG. 2****,** a road slope may be a value indicating the degree of inclination of a road. The road slope (gradient) can be determined by using height values acquired by a high-precision MMS device, selecting specific points (vertex points) according to the sequence of actual driving directions, and then calculating a slope value from the current reference point to the next reference point among the specific points. The determined road slope may be stored as an attribute value related to vertex points in the ADAS map content.

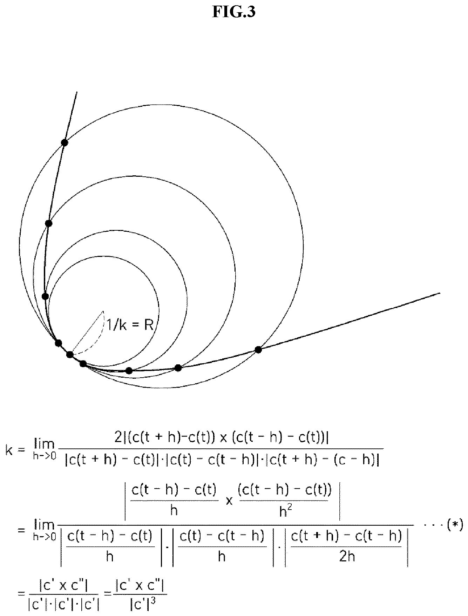

**FIG. 3** is a diagram illustrating a road curvature according to an embodiment of the present disclosure.

Referring to **FIG. 3****,** a road curvature may be a value indicating the degree of bend in a road. The curvature of the road can be determined by inversely calculating the radius of a circumscribed circle in contact with three consecutive points including front and rear points (vertex points) in a driving direction. The determined road curvature may be stored as an attribute value related to each vertex point in the ADAS map content.

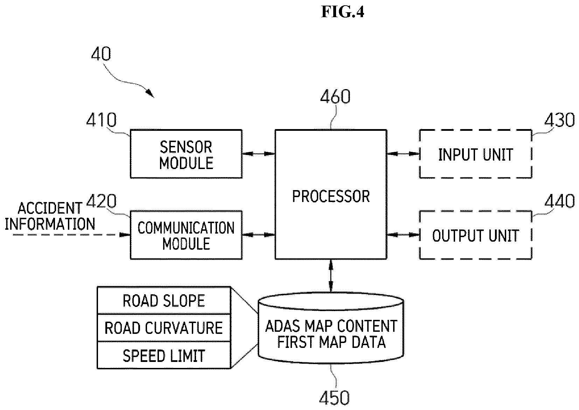

**FIG. 4** is a configuration diagram illustrating an electronic device according to an embodiment of the present disclosure.

Referring to **FIG. 4****,** an electronic device 40 according to an embodiment of the present disclosure may include a sensor module 410, a communication module 420, an input unit 430, an output unit 440, a memory 450, and a processor 460. In an embodiment, some components of the electronic device 40 may be omitted or may further include other components, and some of the components of the electronic device 40 may be coupled to form one entity and identically perform functions of the components before being coupled. In an embodiment, the electronic device 40 may include at least one of an autonomous driving system or a path guidance device. However, for the convenience of explanation in the present disclosure, the electronic device 40 will be described as an autonomous driving system, but the present disclosure is not limited thereto.

The sensor module 410 may sense or check a current location of the electronic device 40. For example, the sensor module 410 may include a positioning sensor (e.g., GPS module) configured to sense a position of the electronic device 40.

The communication module 420 may support establishing a communication channel or a wireless communication channel between the electronic device 40 and another device *(e.g.,* a server device (not shown) providing incident information) and performing communication via the established communication channel. For example, the communication channel may include at least one of LAN, FTTH, xDSL, Wibro, wireless LAN, Wi-Fi, Bluetooth, Zigbee, Wi-Fi Direct (WFD), UWB (Ultrawideband), Infrared Data Association (IrDA), Bluetooth Low Energy (BLE), Near Field Communication (NFC), 3G, 4G, and 5G. The communication module 420 may perform communication by adopting a publicly known communication method, such as CDMA, GSM, W-CDMA, TD-SCDMA, WiBro, LTE, EPC, and the like.

The input unit 430 may receive or sense an input from a user who uses the electronic device 40. For example, the input unit 430 may include at least one input sense circuit among a button, a touch screen, and a microphone. For example, the user input may include at least one input among setting a destination, requesting a path search, requesting autonomous driving, setting ADAS content to be highlighted, setting display of the ADAS content.

The output unit 440 may visually or audibly output at least one data among symbols, numbers, or letters under the control of the processor 460. For example, the output unit 440 may include at lest one output device among a liquid crystal display, an OLED, a touch screen display, and a speaker. For example, the output unit 440 (e.g., display) may visually display a UI screen configured based on the ADAS map content under the control of the processor 460. As another example, the output unit 440 (e.g., speaker) may audibly output vocalized incident information under the control of the processor 460.

The memory 450 may include various types of volatile memory or non-volatile memory. For example, the memory 450 may include a read-only memory (ROM) and a random-access memory (RAM). In an embodiment, the memory 450 may be located inside or outside the processor 460, and the memory 450 may be connected to the processor 460 by using various means known to a person with ordinary skill in the art. The memory 450 may store various data used by at least one component (e.g., the processor 460) of the electronic device 40. The data may include, for example, software and input data or output data for a command related thereto. For example, the memory 450 may store at least one instruction for providing road information. The memory 450 may store first map data (e.g., SD map) and ADAS map content. For example, the ADAS map content may include location coordinates and attribute values related to vertex points at predetermined distance units, each having a unique identification number (ID) and an index number for each driving direction. For example, the attribute values may include at least one of a road slope, a curvature, or a speed limit.

The processor 460 may control at least one another component (e.g., hardware or software) of the electronic device 40, and may perform various types of data processing or computation. For example, the processor 460 may include at least one of a central processing unit (CPU), a graphics processing unit (GPU), a microprocessor, an application processor, an application specific integrated circuit (ASIC), and a field programmable gate array (FPGA) and may include a plurality of cores. According to an embodiment, the processor 460 may check whether at least one piece of content related to the current location among the ADAS map content falls within a predetermined range while guiding a path searched from the first map data. When at least one piece of content falls within the predetermined range, the processor 460 may implement a UI screen, which visualizes the content, and output the implemented UI screen through the output unit 440 (e.g., display).

According to an embodiment, when path search is requested through the input unit 430, the processor 460 may search for a path to the destination based on the first map data. The processor 460 may guide the user along the searched path through the output unit 440. The processor 460 may communicate with a vehicle drive unit equipped with the electronic device 40 and control autonomous driving along the searched path through the vehicle drive unit 40.

According to an embodiment, the processor 460 may check whether content related to a current location among the ADAS map content falls within a predetermined range while guiding the searched path through the output unit 440 (and controlling autonomous driving of the vehicle along the searched path). For example, the processor 460 may check whether the content related to the current location falls within the predetermined range based on the attribute values of the ADAS map content. When a road slope of a current road is equal to or greater than a predetermined slope, a road curvature of the current road is equal to or greater than a predetermined curvature, or the current road is at a speed limit change point based on the content related to the current location, the processor 460 may determine that the content falls within the predetermined range.

In an embodiment, when the current location meets specific conditions, the processor 460 may check whether the ADAS map content falls within the predetermined range. For example, when the current road (*e.g*., highway) has a speed limit equal to or greater than a predetermined speed limit, the processor 460 may check whether the content related to the current location falls within the predetermined range.

According to an embodiment, the processor 460 may implement a UI screen by visualizing the content related to the current location that falls within the predetermined range. For example, the content related to the current location may include at least one of ADAS map content of the current road or ADAS map content of a road (ahead) within a predetermined distance from the current location. For example, when the processor 460 confirms that the slope of the current road is equal to or greater than a predetermined slope based on the ADAS map content, it may implement a UI screen, which visualizes the road slope. As another example, when the processor 460 confirms that the road curvature of the current road is equal to or greater than a predetermined curvature based on the ADAS map content, it may implement a UI screen, which visualizes the road curvature. As yet another example, when the processor 460 confirms that the current road is at a speed limit change point based on the ADAS map content, it may implement a UI screen, which visualizes the changed (or to-be-changed) speed limit.

According to an embodiment, the processor 460 may generate a UI screen including text and an icon related to the content of the current location. For example, the processor 460 may overlay a magnified screen on a portion of a path guidance screen and display the content related to the current location in text and an icon with specified colors and shades on the magnified screen. As another example, the processor 460 may display a slope of a downhill road, which is equal to or greater than a first slope (predetermined slope), in text with a first color *(e.g.,* black) and an icon *(e.g.,* circle icon) with a second color *(e.g.,* red). The processor 460 may display a slope of an uphill road, which is equal to or greater than a second slope (predetermined slope) in text with the first color and an icon with a third color (*e.g.,* blue). As another example, the processor 460 may display a curvature of a road, which is equal to or greater than a predetermined curvature, in text with the first color and an icon with a fourth color (*e.g.,* red). The processor 460 may display the icon with darker shades as an absolute value of the road slope or the road curvature increases. The first slope, the second slope, and the predetermined curvature may be set to values that support safe driving and improve fuel efficiency through, for example, vehicle driving tests.

According to an embodiment, when the processor 460 confirms at least one piece of information among the road slope, the road curvature, or the speed limit change point based on the ADAS map content, it may control vehicle driving to improve fuel efficiency based on the at least one piece of information. For example, the processor 460 may pre-check an uphill slope of the road ahead and adjust an accelerator pedal value based on the slope or pre-check a downhill slope and adjust acceleration and deceleration pedal values based on the slope to maintain a constant vehicle speed. As another example, the processor 460 may pre-check points where the speed limit decreases or increases and adjust the accelerator/decelerator pedal values to smoothly adjust the vehicle speed. As yet another example, the processor 460 may smoothly adjust the vehicle speed based on the road curvature. As still another example, when calculating a drivable distance based on a remaining battery charge, the processor 460 may also consider the road slope, the road curvature, and the speed limit change point to calculate the drivable distance. Thus, the processor 460 according to an embodiment can help pre-determine a road slope and a road curvature, appropriately adjust a driving speed, and efficiently estimate a driving distance. Further, the processor 460 may efficiently support suppressing electric vehicle battery discharge and improving vehicle fuel efficiency.

According to an embodiment, when the processor 460 acquires text-based incident information through the communication module 420, it may convert the incident information into speech by using Text to Speech (TTS). The processor 460 may convert the incident information into speech and output the vocalized incident information through the output unit 440 (*e.g.,* speaker). For example, the incident information may include information of unexpected situations, such as construction or accidents, on the road.

According to various embodiments, the processor 460 may display ADAS map content related to the current location differently depending on the driving mode of the vehicle set through the input unit 430, the vehicle platform performance, or the surrounding environment. For example, the processor 460 may display the ADAS map content on an enlarged or small screen depending on the user's settings through the input unit 430. The processor 460 may display the ADAS map content only during highway driving according to the user's settings. Further, the processor 460 may change the colors, icon shapes, etc. of the ADAS map content according to the user's settings.

According to various embodiments, the ADAS map content may be stored in an external memory (not shown) of the electronic device 40. In this case, the processor 460 may request the ADAS map content related to the current location from an external electronic device which manages the external memory 450. Subsequently, the processor 460 may acquire the ADAS map content related to the current location from the external electronic device and check whether the acquired content falls within a predetermined range based on attribute values of the acquired ADAS map content.

Thus, the electronic device 40 according to an embodiment can selectively display the ADAS map content in sections requiring the user's attention during highway driving. Therefore, it is possible to provide a new form of map content that improves the user's visibility and can be appropriately provided.

Further, the electronic device 40 according to an embodiment can display the ADAS map content differently depending on the driving mode of the vehicle, the platform performance, or the surrounding environment. Therefore, it is possible to suppress unnecessary display of the ADAS map content that can confuse or distract the driver.

Furthermore, the electronic device 40 according to an embodiment can provide real-time incident information (text-based incident information) and can also convert the incident information into speech to be used for guidance. Therefore, it is possible to suppress dizziness of the driver caused by excessively frequent display of various types of information and support safe driving.

Moreover, the electronic device 40 according to an embodiment can pre-check a road slope or curvature and appropriately adjust a vehicle driving speed or assist in efficient driving distance estimation. Therefore, it is possible to support suppressing electric vehicle battery discharge and improving vehicle fuel efficiency.

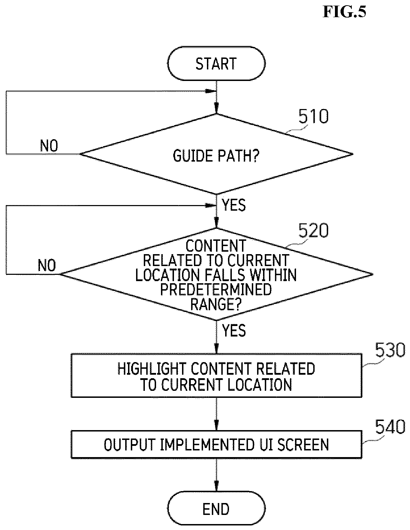

**FIG. 5** is a flowchart schematically illustrating a path guidance method according to an embodiment of the present disclosure.

Referring to **FIG. 5****,** the electronic device 40 may guide a path searched based on first map data in an operation 510. The first map data may be, for example, an SD map. For example, when a global path to a destination is set, the electronic device 40 may guide the set path through the output unit 440.

In an operation 520, the electronic device 40 may check whether content related to a current location among ADAS map content falls within a predetermined range while guiding the searched path. For example, the electronic device 40 may check whether the current location or the road ahead falls within the predetermined range, which corresponds to a caution zone, based on the ADAS map content.

In an operation 530, when the content related to the current location falls within the predetermined range, the electronic device 40 may implement a UI screen, which visualizes the content related to the current location. For example, the electronic device 40 may implement a UI screen, which highlights the content related to the current location (*e.g*., enlarges the content related to the current location or includes relevant text or icon) so as to be easily seen by the user (driver).

In an operation 540, the electronic device 40 may output the implemented UI screen through the output unit 440 *(e.g.,* display). For example, the electronic device 40 may display the UI screen, which highlights a road curvature, a road slope or a speed limit related to the current location, on a portion of a path guidance screen.

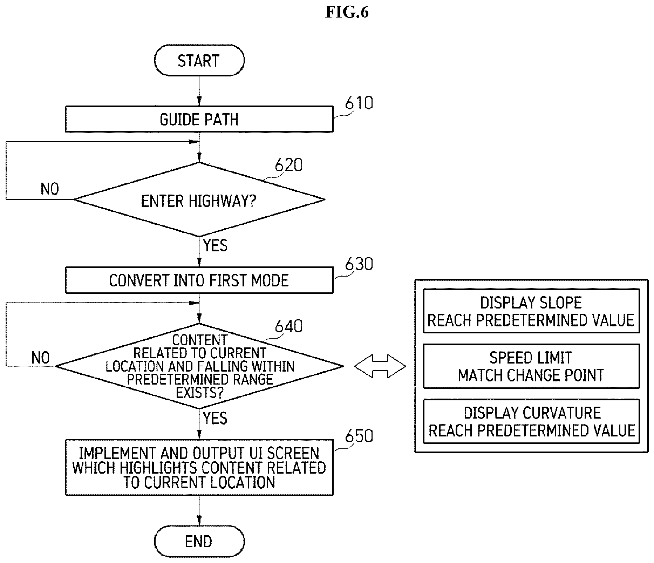

**FIG. 6** is a detailed flowchart illustrating the path guidance method according to an embodiment of the present disclosure.

Referring to **FIG. 6****,** the electronic device 40 may search a path according to an input from the user through the input unit 430 and guide the searched path through a path guidance screen in an operation 610.

In an operation 620, the electronic device 40 may check whether a vehicle enters a highway based on the current location while guiding the searched path. For example, the electronic device 40 may check whether the vehicle enters the highway based on link attribute information of first map data.

In an operation 630, when the electronic device 40 confirms that the vehicle enters the highway, it may convert a driving mode into a first mode. The first mode may be, for example, a mode in which ADAS map content related to a current location and falling within a predetermined range is displayed in a highlighted manner. The predetermined range may be, for example, a range requiring attention to driving the vehicle.

In an operation 640, the electronic device 40 may check whether the ADAS map content related to the current location includes content falling within the predetermined range in the first mode. For example, when a road slope related to the current location is equal to or greater than a predetermined slope, there is a point where a speed limit related to the current location is changed, or a road curvature related to the current location is equal to or greater than a predetermined curvature, the electronic device 40 may confirm that the ADAS map content includes the content falling within the predetermined range.

In an operation 650, when the content related to the current location falls within the predetermined range, the electronic device 40 may implement a UI screen, which highlights the content, and output the implemented UI screen through the output unit 440. For example, the electronic device 40 may implement a UI screen, which highlights text or an icon indicating a road slope equal to or greater than the predetermined slope, a road curvature equal to or greater than the predetermined curvature or a speed limit change point. The electronic device 40 may overlay and output the implemented UI screen on a portion of the path guidance screen.

In the operations 630 to 650, when the electronic device 40 acquires real-time incident information, it may convert text of the incident information into speech and output the vocalized incident information through the output unit 440.

Thus, the electronic device 40 according to an embodiment can selectively display the ADAS map content in sections requiring the user's attention during highway driving. Therefore, it is possible to provide a new form of map content that improves the user's visibility and can be appropriately provided.

Moreover, the electronic device 40 according to an embodiment can provide real-time incident information (text-based incident information) and can also convert the incident information into speech to be used for guidance. Therefore, it is possible to suppress dizziness of the driver caused by excessively frequent display of various types of information and support safe driving.

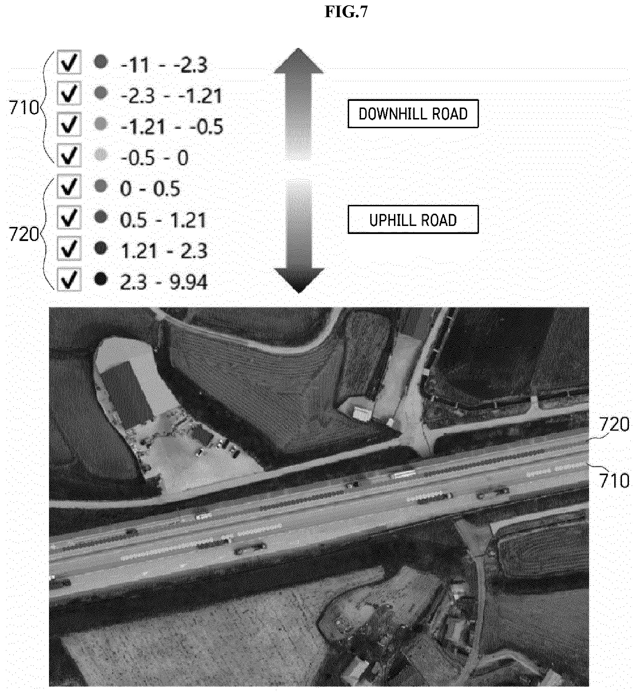

**FIG. 7** shows an example of a UI screen displaying road slopes according to an embodiment of the present disclosure.

Referring to **FIG. 7****,** the electronic device 40 according to an embodiment may display text and an icon indicating a slope of a current road on a path guidance screen. For example, when a current location is at a downhill road 710 having a slope equal to or greater than a first slope or an uphill road 720 having a slope equal to or greater than a second slope, the electronic device 40 may display the slope of the road in text with a first color (*e.g.,* black).

According to an embodiment, the electronic device 40 may display an icon indicating a road slope on a path guidance screen and may display the icon with various colors and shades depending on the road slope. For example, the electronic device 40 may display the icon with a second color (*e.g.,* red) when the road slope is a downhill slope (-) or may display the icon with a third color (*e.g.,* blue) when the road slope is an uphill slope. For example, the electronic device 40 may display the icon of the second color with a first shade when the road slope is smaller than -0 and equal to or greater than -0.5 (a negative value is a downhill slope) or may display the icon of the second color with a second shade darker than the first shade when the road slope is smaller than -0.5 and equal to or greater than -1.21. Also, the electronic device 40 may display the icon of the second color with a third shade darker than the second shade when the road slope is smaller than -1.21 and equal to or greater than -2.3 or may display the icon of the second color with a fourth shade darker than the third shade when the road slope is smaller than -2.3 and equal to or greater than -9.94. The electronic device 40 may display the icon of the third color with the first shade when the road slope is equal to or greater than 0 and smaller than 0.5 (a positive value is an uphill slope) or may display the icon of the third color with the second shade darker than the first shade when the road slope is equal to or greater than 0.5 and smaller than 1.21. Also, the electronic device 40 may display the icon of the third color with the third shade darker than the second shade when the road slope is equal to or greater than 1.21 and smaller than 2.3 or may display the icon of the third color with the fourth shade darker than the third shade when the road slope is equal to or greater than 2.3 and smaller than 9.94.

Thus, the electronic device 40 according to an embodiment displays the slope of a road zone with a very large road slope in a highlighted manner. Therefore, it is possible to support enabling the user or the autonomous driving system to pay attention in advance to driving a vehicle.

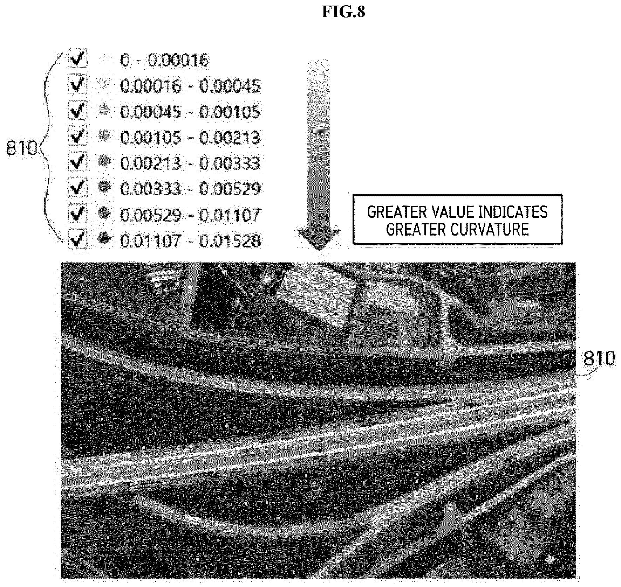

**FIG. 8** shows an example of a UI screen displaying road curvatures according to an embodiment of the present disclosure.

Referring to **FIG. 8****,** when the electronic device 40 confirms from content related to a current location that a current road or a road ahead is a road 810 having a road curvature equal to or greater than a predetermined curvature, it may display at least one of text or an icon indicating a curvature with a color or shade according to the curvature of the road on the path guidance screen. For example, the electronic device 40 may display text and an icon indicating a road curvature with designated colors *(e.g.,* black and red), respectively, and particularly, may adjust and display the icon with 8 levels of shade depending on the curvature. When the curvature is equal to or greater than 0 and smaller than 0.00016, the electronic device 40 may display the icon with the lightest shade level of 1. The electronic device 40 increases the shade of the icon as the road curvature increases, and when the curvature is equal to or greater than 0.01107 and smaller than 0.01528, the electronic device 40 may display the icon with the darkest shade level of 8.

Thus, the electronic device 40 according to an embodiment displays a curvature value in a highlighted manner depending on a road curvature. Therefore, it is possible to support enabling the user or the autonomous driving system to pay attention in advance to driving a vehicle.

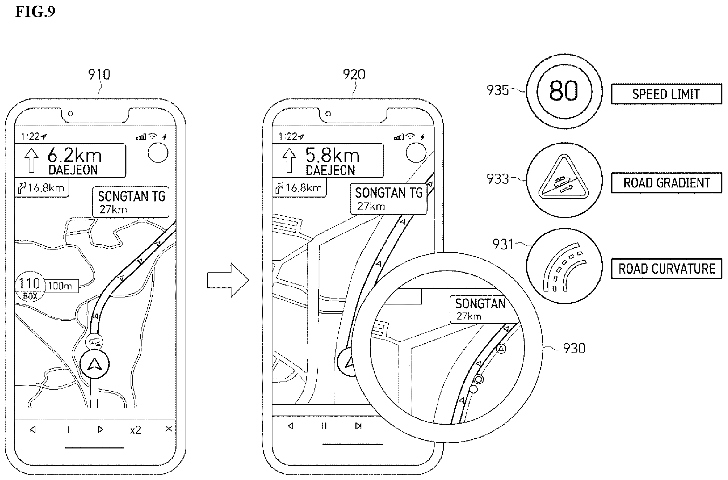

**FIG.** 9 shows an example of a UI screen displaying ADAS map content according to an embodiment of the present disclosure.

Referring to **FIG. 9****,** the electronic device 40 may display a path guidance screen 910 during driving along a searched global path. The electronic device 40 may check ADAS map content related to a current location and display a screen 930, which displays the ADAS map content, on a portion of a path guidance screen 920. For example, the electronic device 40 may display a road curvature-related icon 931, a road gradient (slope)-related icon 933, and a speed limit-related icon 935 on the screen 930. The electronic device 40 may display the icons 931, 933 and 935 related to the current location-related ADAS map content with a first size, and may display the icons 931, 933 and 935 with a second size greater than the first size when it comes close to the location of each ADAS map content.

Thus, the electronic device 40 according to an embodiment can selectively display the ADAS map content in sections requiring the user's attention during highway driving. Therefore, it is possible to provide a new form of map content that improves the user's visibility and can be appropriately provided.

Various embodiments of the present disclosure and terminology used herein are not intended to limit the technical features described in the present specification to specific embodiments, but should be understood to include various changes, equivalents, or substitutes of the embodiments. With respect to the description of the drawings, similar reference numerals may be used for similar or related components. The singular form of a noun corresponding to an item may include one item or a plurality of items unless the context clearly indicates otherwise. In the present disclosure, each of the phrases such as "A or B," "at least one of A and B," "at least one of A or B," "A, B or C," "at least one of A, B and C," and "at least one of A, B, or C" may include all possible combinations of items listed together in a corresponding phrase of the phrases. Terms such as "primary," "secondary," or "first," or "second" may be used merely to distinguish a corresponding component from other corresponding components, and do not limit the corresponding components in other aspects (for example, importance or order). It is to be understood that if a component (*e.g.,* a first component) is referred to, with or without the term "operatively" or "communicatively", as "coupled with," "coupled to," "connected with," or "connected to" another component (*e.g.,* a second component), it means that the component may be coupled with the other component directly (*e.g.,* wiredly), wirelessly, or via a third component.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

Various embodiments as set forth herein may be implemented as software (*e.g.,* program) including one or more instructions that are stored in a storage medium (*e.g.,* the memory 450 (for example, internal memory or external memory)) that is readable by a machine (*e.g.,* the electronic device 40). For example, a processor (*e.g.,* the processor 460) of the machine (*e.g.,* the electronic device 40) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (*e.g.,* electromagnetic wave), but this term does not differentiate between where data are semi-permanently stored in the storage medium and where the data are temporarily stored in the storage medium.

According to an embodiment, the method according to various embodiments of the present disclosure may be included in a computer program product and provided. The computer program product may be transacted as a commodity between a seller and a buyer. The computer program product may be distributed in the form of a device-readable storage medium (*e.g.,* compact disc read only memory (CD-ROM)), or may be distributed (*e.g.,* downloaded or uploaded) directly or on-line through an application store (*e.g.,* Play Store^{™}) or between two user devices (*e.g.,* smart phones). In the case of on-line distribution, at least a portion of the computer program product may be at least temporarily stored or temporarily generated on a device-readable storage medium such as a server of a manufacturer, a server of an application store, or a memory of a relay server.

Each of components according to various embodiments of the present disclosure may be implemented in the form of software or hardware, such as a digital signal processor (DSP), a field programmable gate array (FPGA) or an application specific integrated circuit (ASIC), and they carry out predetermined functions. However, the components are not limited to the software or the hardware, and each of the components may be stored in an addressable storage medium or may be configured to implement one or more processors. The components may include, for example, software, object-oriented software, classes, tasks, processes, functions, attributes, procedures, sub-routines, segments of program codes, drivers, firmware, micro codes, circuits, data, database, data structures, tables, arrays, variables, and the like.

According to various embodiments, each component (*e.g.,* module or program) of the above-described components may include a single or a plurality of entities. According to various embodiments, one or more of the aforementioned components or operations may be omitted, or one or more other components or operations may be added. Alternatively or additionally, a plurality of components (*e.g.,* module or program) may be integrated into one component. In this case, the integrated component may perform one or more functions of each component of the plurality of components the same or similar to that performed by a corresponding component of the plurality of components before the integration. According to various embodiments, operations performed by a module, program, or another component may be executed sequentially, in parallel, repeatedly, or heuristically, or one or more of the operations may be executed in a different order, omitted, or one or more other operations may be added.

## Claims

1. An electronic device, comprising:
a display;
a memory configured to store first map data and advanced driver assistance system (ADAS) map content mapped to the first map data in units of links; and
a processor functionally connected to the display and the memory,
wherein the processor checks whether content related to a current location among the ADAS map content falls within a predetermined range while guiding a path searched from the first map data, and when the content related to the current location falls within the predetermined range, the processor implements a UI screen, which highlights the content related to the current location, and outputs the implemented screen through the display.

2. The electronic device of Claim 1,
wherein the ADAS map content includes location coordinates and attribute values related to vertex points at predetermined distance units, each having a unique identification number and an index number for each driving direction, and
the attribute values include at least one of a road slope, a curvature, or a speed limit.

3. The electronic device of Claim 2,
wherein the processor checks at least confirms at least one piece of information among the road slope, the road curvature, or a change point of the speed limit, and controls vehicle driving by controlling at least one of an accelerator pedal, a deceleration pedal, and a steering wheel to improve fuel efficiency based on the at least one piece of information.

4. The electronic device of Claim 2 or 3,
wherein the processor calculates a drivable distance according to a remaining battery charge based on the at least one piece of information.

5. The electronic device of any one of Claims 1 to 4,
wherein when a road slope is equal to or greater than a predetermined slope or a road curvature is equal to or greater than a predetermined curvature based on the content related to the current location, the processor confirms that the content falls within the predetermined range and implements a UI screen, which visualizes the road curvature.

6. The electronic device of any one of Claims 1 to 5,
wherein when the speed limit change point is confirmed based on the content related to the current location, the processor confirms that the content falls within the predetermined range and implements a UI screen, which visualizes the speed limit change point.

7. The electronic device of any one of Claims 1 to 6,
wherein the processor implements the UI screen, which displays the content related to the current location in text and an icon.

8. The electronic device of any one of Claims 1 to 7, further comprising:
a communication module and a speaker,
wherein when incident information is acquired through the communication module, the processor vocalizes the incident information and outputs the vocalized incident information through the speaker.

9. The electronic device of any one of Claims 1 to 8,
wherein when a current road has a speed limit equal to or greater than a predetermined speed limit, the processor checks whether the content related to the current location falls within the predetermined range.

10. A method for guiding a path by an electronic device configured to store first map data and ADAS map content, comprising:
an operation of checking whether content related to a current location among the ADAS map content falls within a predetermined range while guiding a path searched from the first map data;
an operation of implementing a UI screen, which highlights the content related to the current location, when the content related to the current location falls within the predetermined range; and
an operation of outputting the implemented UI screen through a display.
